# EUROPÄISCHE PATENTSCHRIFT

(11) **EP 4 558 946 B1**
(45) Veröffentlichungstag und Bekanntmachung des Hinweises auf die Patenterteilung: **03.09.2025**
(21) Anmeldenummer: 23810024.2
(22) Anmeldetag: 20.11.2023
(51) Int. Cl.: G06Q 10/08, G06Q 10/087, G05B 19/418

(54) **LAGER- UND KOMMISSIONIERSYSTEM MIT OPTIMIERTEM MATERIALFLUSS**
STORAGE AND ORDER-PICKING SYSTEM WITH OPTIMISED MATERIAL FLOW
SYSTÈME DE STOCKAGE ET DE PRÉPARATION DE COMMANDES À FLUX DE MATÉRIEL OPTIMISÉ

(30) Priorität: 24.11.2022 DE 102022131101
(43) Veröffentlichungstag der Anmeldung: 28.05.2025
(73) Patentinhaber: SSI Schäfer IT Solutions GmbH, 8114 Friesach (AT)
(72) Erfinder: KLUG, Markus, 8111 Gratwein-Straßengel (AT)
(74) Vertreter: Witte, Weller & Partner Patentanwälte mbB
(86) Internationale Anmeldenummer: PCT/EP2023/082400
(87) Internationale Veröffentlichungsnummer: WO 2024/110390

(56) Entgegenhaltungen:
- WO-A1-2022/073052
- CN-A- 113 743 876
- DE-A1- 102020 202 945

## Beschreibung

Die vorliegende Offenbarung betrifft allgemein das Gebiet der Intralogistik, und insbesondere eine optimierte Steuerung eines Materialflusses in einem Intralogistiksystem, wie z.B. in einem Lager- und/oder Kommissioniersystem. Der Materialfluss wird quasi-kontinuierlich durchsatzoptimiert koordiniert, indem Betriebsparameter von Transporteinrichtungen zyklisch verändert werden, während initial erzeugte Transportaufträge unverändert bleiben und kontinuierlich umgesetzt werden.

Allgemein wird unter dem Begriff "Materialfluss" (MF) eine Abfolge von Lager-, Transport- und Bearbeitungsprozessen verstanden. Nach VDI 2689 versteht man unter diesem Begriff alle Vorgänge und deren Verkettung beim Gewinnen, Be- und Verarbeiten sowie bei der Verteilung von MF-Objekten (Handhabungseinheiten, wie z.B. Lagereinheiten, Werkstücke, Fördergüter, etc.) innerhalb fester Funktionsbereiche. Die Bereiche können verschiedene Stationen zwischen einem (Waren-)Eingang (der auch durch eine Produktionsstätte implementiert sein kann) und einem (Waren-)Ausgang umfassen. Zum MF gehören alle Formen eines Durchlaufs der MF-Objekte durch ein MF-System, das einem Transportnetzwerk in einem Bereich zwischen dem Eingang und Ausgang entspricht.

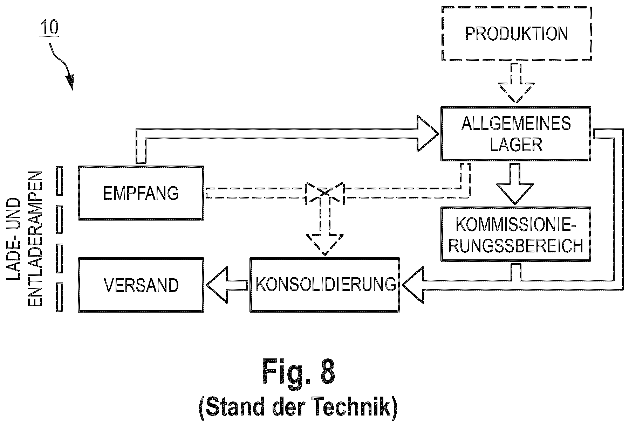

Fig. 8 veranschaulicht schematisch einen durch Pfeile visualisierten, herkömmlichen Materialfluss von einem Eingang (Empfang) zu einem Ausgang (Versand) eines Intralogistiksystems 10. Verschiedene Bereiche und Stationen (Empfang, Produktion, Lager, Kommissionierung, Konsolidierung bzw. Pack-Station) sind über fördertechnische Einrichtungen miteinander verbunden. Existierende fördertechnische Verbindungen sind durch Pfeile mit einer durchgezogenen Linie veranschaulicht. Weitere, alternative und/oder zusätzliche Verbindungen sind durch Pfeile mit einer Strichlinie veranschaulicht. Die Gesamtheit aller Verbindungen definiert ein Transportnetzwerk. Es versteht sich, dass die Bereiche und Stationen auf vielfältige Arten und Weisen fördertechnisch miteinander verbindbar sind. Dies legt ein Systemplaner nach Bedarf fest.

MF-Vorgängen werden in einem herkömmlichen Materialflussrechner (MFR) in Form von entsprechenden Transportaufträgen (vorab) geplant und deren Umsetzung wird (in Echtzeit) koordiniert und überwacht. Der MFR plant und koordiniert entsprechende Quelle-Ziel-Beziehungen. Die durch den MFR verursachte Materialflusssteuerung wird häufig auch als eine (Kommissionier-)Auftragsverwaltung beschrieben, die dem Transportnetzwerk zugeordnet ist. Diese pauschale Definition der Materialflusssteuerung wird jedoch der tatsächlichen Aufgabe nicht gerecht, wenn im Intralogistiksystem eine gewachsene, heterogene Struktur aus performanten Transporteinrichtungen existiert, die präzise koordiniert werden muss, um ein optimales Betriebsergebnis zu ermöglichen. Die Materialflusssteuerung hat eine zentrale Funktion. Sie soll trotz einer Vielzahl verschiedener Transporteinrichtungen und Ausbaustufen zu jedem Zeitpunkt z.B. den maximalen Durchsatz, eine schnellstmögliche Bereitstellung und/oder den geringsten Energiebedarf gewährleisten.

Die Materialflusssteuerung hat die primäre Aufgabe die Transportaufträge der angeschlossenen Bereiche und Stationen perfekt zu koordinieren. Die verfügbaren Transporteinrichtungen müssen mit den Transportaufträgen beauftragt und dabei möglichst ausgelastet werden, ohne das Transportnetzwerk zu blockieren. Zu jedem Zeitpunkt sollen der Betriebszustand (z.B. Auslastungsgrad) des Netzwerks und die Belegtzustände von Strecken, Wegpunkten, Kreuzungen, Verzweigungen und der Transporteinrichtungen berücksichtigt werden. Die Menge der MF-Objekte und deren Transportgeschwindigkeiten stehen in Wechselwirkung miteinander.

Der klassische MFR ist aber nur begrenzt in der Lage, MF-Probleme zu lösen, die in der Realität zufällig auftreten. Der MFR kann diese tatsächlich auftretenden Probleme beim initialen Erzeugen der Transportaufträge nicht antizipieren, sondern reagiert erst auf aufgetretene Problemmeldungen.

Zum Beispiel kann der klassische MFR einen real und zufällig auftretenden Schlupf eines Förderguts während eines Transports des Förderguts z.B. auf einem Bandförderer - und eine daraus resultierende Durchsatzverschlechterung - oder andere technische Probleme nicht vorhersehen. Der Schlupf führt zu einer verzögerten Ankunftszeit an dem vorab, durch den MFR festgelegten Ziel. Die verspätete Ankunft kann wiederum dazu führen, dass das Ziel durch ein anderes, zwischenzeitlich eingetroffenes Fördergut belegt ist oder dass sich eine vorab geplante Sequenz nicht einstellt. In diesem Fall kann der klassische MFR lediglich die Auflösung dieses Fördergutabgabeproblems situativ lösen, indem er das abgebende Förderband z.B. anweist, mit der Abgabe - entgegen dem ursprünglichen Plan - noch zu warten.

Als weiteres Beispiel können auch fahrerlose Transportfahrzeuge (FTF) genannt werden. Der klassische MFR bestimmt vorab (kollisionsfreie) Transport- bzw. Fahraufträge für z.B. zwei FTF. Während der tatsächlichen Umsetzung begegnen sich die FTF dann aber unerwartet dennoch derart, dass die Gefahr einer Kollision besteht (z.B. aufgrund von verzögerte Abfahrten wegen einer verspäteten Freigabe des FTF durch seine Sensorik, mögliche Zwischenstopps oder verringerte Fahrbewegungen wegen Blendung oder anderer externer Einflüsse auf die umgebungsüberwachende Kameratechnik, etc.). Die FTF "sehen" sich gegenseitig mittels ihrer integrierten Abstandsensor und halten aus Sicherheitsgründen an. Der MFR wird über beide Stoppzustände informiert und entscheidet z.B. in Abhängigkeit der Transportprioritäten, die mit den jeweils transportierten Fördergütern verknüpft sind, welches der FTF zuerst fahren darf. Der MFR konnte bei seiner ursprünglichen Planung der Transportaufträge nicht vorhersehen, dass z.B. der Motor von einem der beiden FTF kurz vor seinem Lebensende steht und das entsprechende FTF deshalb nur noch mit z.B. 80% seiner Nenngeschwindigkeit fahren kann und fährt. Der klassische MFR kann in diesem Fall nur noch situativ auf dieses Problem reagieren und im schlimmsten Fall kommt es sogar zu einem (unerwarteten) Stillstand des Systems, der nur noch durch einen manuellen Eingriff eines Wartungstechniker von außen aufgelöst werden kann. Dies reduziert den Durchsatz erheblich.

Vom klassischen MFR zu unterscheiden sind klassische MF-Simulationen, die im (Projektierungs-)Vorfeld bei einer Planung eines Intralogistiksystems eingesetzt und auf Basis historischer Daten ohne Verbindung zu einem Echtsystem entwickelt werden.

Im Allgemeinen basiert jede Simulation auf einem (statischen) Simulationsmodell, wobei das Modell mit einem Satz von Parameter gefüttert wird und das Ergebnis über die Zeit berechnet bzw. simuliert wird. Unter dem Begriff "Simulation" versteht man nach VDI 3633 das Nachbilden eines Systems mit seinen dynamischen Prozessen in einem experimentierbaren Modell, um zu Erkenntnissen zu gelangen, die auf die Wirklichkeit übertragbar sind. Insbesondere werden die Prozesse über die Zeit entwickelt. Im weiteren Sinne wird unter Simulation das Vorbereiten, Durchführen und Auswerten gezielter Experimente mit einem Simulationsmodell verstanden Jedem Modell sind aber Grenzen (z.B. Begrenztheit der Mittel, Energie, Zeit, Geld) gesetzt. Deswegen werden im Modell minimal einflussnehmende Faktoren des Öfteren nicht hinreichend genau berücksichtigt, so dass es oft nur eine grobe Vereinfachung der Realität darstellt. Die Vereinfachungen beeinflussen die Genauigkeit des Simulationsergebnisse nachteilig. Intralogistische Bereiche und das Transportnetzwerk werden zusammengefasst und stark vereinfacht simuliert. Die MF-Simulation wird zwar mit realen Auftragsdaten aus der Vergangenheit gespeist, um die Bewegung der MF-Objekte durch eine jeweilige Systemvariante (offline) möglichst realitätsnah abzubilden. Gleichzeitig werden eine Kapazität, Leistungsfähigkeit und Steuerung der jeweiligen Systemvariante (virtuell) auf Optimierungsmöglichkeiten hin untersucht. Die gewonnenen Erkenntnisse fließen dann in die ausgewählte Systemvariante ein, die dann realisiert wird

Eine Hauptaufgabe von (computer-implementierten) MF-Simulationen ist es, verschiedene (Layout-)Varianten eines geplanten MF-Systems und dazu passende grundlegende Strategien vorab zu testen, ohne jede von ihnen zu realisieren. Es kann z.B. getestet werden, ob an einer spezifischen Stelle des MF bzw. Transportnetzwerks der Einsatz einer einzigen Transporteinrichtung eines Typs A (Systemvariante 1) oder von zwei parallelen Transporteinrichtungen des Typs B (Systemvariante 2) in Bezug auf einen gewünschten Durchsatz besser wäre.

Klassische MF-Simulationen werden also regelmäßig während der (frühen) Planungsphase des Intralogistiksystems eingesetzt, um eine Leistungsfähigkeit der Systemvarianten zu analysieren und zu vergleichen. Dann kann die beste Variante ausgewählt und realisiert werden. In manchen Fällen wird das im Vorfeld erstellte Simulationsmodell dahingehend weiter eingesetzt, dass während einer Planungsvalidierung (d.h. bei einer Prüfung, ob die Aufträge in der geplanten Form und Reihenfolge durchführbar sind) Daten aus dem System einmalig erneut kopiert und dem Simulationsmodell bereitgestellt werden, und das Simulationsmodell weiterhin auf Basis der getroffenen Annahmen und Abstraktionen eine Machbarkeit errechnet. Eine kontinuierliche "Überwachung" des Simulationslaufs mit dem realen Ablauf zur Durchführung der Aufträge ist jedoch nicht enthalten.

Die oben erwähnten, zeitnah auftretenden MF-Probleme (Kollisionen, Staus, Verschleiß, Schlupf, etc.), die sich zufällig ergeben, lassen sich also weder durch den MFR noch durch eine MF-Simulation lösen.

Die Planung und Koordinierung des MF wird für den klassischen Materialflussrechner umso komplexer, je mehr die folgenden Aspekte zusätzlich berücksichtigt werden müssen: Sequenzierung; große Artikelsortimente; dezentrale Steuerungsansätze in Abkehr vom klassisch zentralen Materialflussrechner; Verschleißeffekte; und/oder Fehler beim Identifizieren der Materialflussobjekte an Entscheidungspunkten.

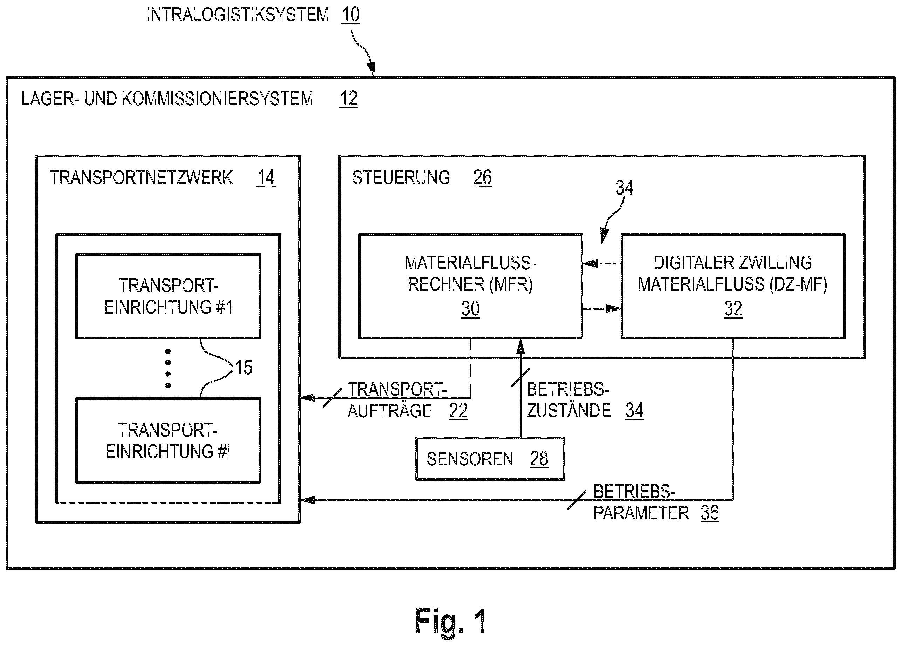

Die DE 10 2020 202 945 A1 betrifft ein Lagersystem und Verfahren zum Betreiben eines derartigen Lagersystems. Die DE 10 2020 202 945 A1 beschreibt ferner in ihren Absätzen 1, 3-7, 34 und 37:
"[0001]: *Die Erfindung betrifft ein Lagersystem, insbesondere Intralogistikanlage oder Lager- und Entnahmesystem, zum Einlagern und*/*oder Auslagern eines Lagerguts in oder aus dem Lagersystem mit einem Lager, vorzugsweise Regallager, einem Regalförderzeug zum Transport von Lagergut oder Behältern für das Lagergut innerhalb des Lagers und*/*oder in das Lager hinein und*/*oder aus dem Lager heraus und einer Steuereinrichtung für das Regalförderzeug.*
: *In diesem Dokument sind unter dem Begriff "Regalförderzeug" ganz allgemein eine oder mehrere Vorrichtungen zum Transport von Lagergut oder Behältern für das Lagergut oder auch von Shuttles zu verstehen. Eine derartige Vorrichtung kann beispielsweise ein Regalbediengerät, ein Shuttle, ein Behälter-Heber oder ein Shuttle-Heber sein. Meist weisen moderne Lagersysteme mehrere derartige Vorrichtungen in unterschiedlichen Konstellationen auf. Letztendlich umfasst der Begriff "Regalförderzeug" beliebige Vorrichtungen, die Lagergut oder Bestandteile des Lagersystems bewegen oder transportieren.*
: *Es gibt in der Praxis viele verschiedene Möglichkeiten, um die Einlagerung und zeitlich versetzte Auslagerung von Lagergut - beispielsweise Behälter, Kartons oder Tablare - umzusetzen. Neben den traditionellen Regalbediengeräten, die mit klassischer Fördertechnik kombiniert werden, gewinnen Shuttle-Systeme verstärkt an Bedeutung. Shuttles sind sehr kleine Regalbediengeräte mit geringem oder gänzlich ohne Hub. Um die oberen Positionen in einem Regal zu erreichen, sind für die Shuttles auf jeder Regalebene eigene Schienen im Regal vorgesehen. Häufig sind die Shuttles derartigen Fahrschienen - beispielsweise je Regalgasse und je Regalebene ein Shuttle - oder den Regalebenen fest zugeordnet. Eine Zuordnung zu den Regalebenen bietet den Vorteil einer variablen Anzahl an Shuttles je Regalebene, jedoch müssen die Shuttles zusätzlich mit einer Technik zum Gassenwechsel ausgestattet werden.*
: *Teilweise sind die Shuttles weder einer Gasse noch einer Ebene zugeordnet, wobei sie beispielsweise über Shuttle-Heber oder Regalförderzeug-Heber oder durch Klettern die Ebenen wechseln können. Letztendlich können bei Shuttle-Systemen deutlich mehr Roboter parallel oder zeitgleich arbeiten als in einem System aus klassischen Regalbediengeräten, wobei bei Shuttle-Systemen allerdings eine höhere Anforderung an die Steuereinrichtung gestellt ist.*
: *Zur Überwindung einer Höhendifferenz können ein oder mehrere Behälterheber eingesetzt werden. Angegliedert am Heber ist entweder direkt ein Arbeitsplatz, um die Lagergüter zu Kommissionieren. Alternativ hierzu können mittels weitläufiger Fördertechnik oder fahrerlosen Transportsystemen verschiedenste Arbeitsplätze oder Fertigungsbereiche an das Lager angebunden werden.*
: *Shuttle-Systeme sind komplexe Systeme, die eine Kombination aus vielen Maschinen oder - abstrakter betrachtet - Ressourcen aufweisen, beispielsweise ein Regal mit Fahrwegen, ein oder mehrere Regalförderzeuge je Lagerebene oder Regalebene, gegebenenfalls mehrere Behälterheber, gegebenenfalls einen oder mehrere Regalförderzeug-Heber, gegebenenfalls aktiv angetriebene Pufferplätze für die Übergabe vom Regalförderzeug zum Heber, einen oder mehrere Arbeitsplätze und*/*oder gegebenenfalls Sequenzierpufferplätze, beispielsweise am Heber gegenüber den Pufferplätzen angeordnet. Damit obliegt der übergeordneten Steuereinrichtung die herausfordernde Aufgabe, eine möglichst optimale Zuordnung von Lageraufträgen und Abstimmung aller Maschinen und Vorrichtungen zu treffen, um beispielsweise einen hohen Systemdurchsatz zu erzielen. Weitere Ziele können ein reduzierter Personaleinsatz, eine kurze Durchlaufzeit - Zeit zwischen Auftragseingabe in das System und abgeschlossenem Auftrag - sowie ein reduzierter Verschleiß oder reduzierte Betriebskosten sein. Die beiden letztgenannten Ziele werden vorwiegend durch eine der Auftragslage angepasste Dynamik, eine gleichmäßige Auslastung aller Anlagenbereiche oder durch eine geschickte Einlagerstrategie erreicht, die kurze Fahrwege für öfter benötigte Lagergüter durch einen passenden Lagerplatz vorsieht.*
: *Der linke Teil der* *Fig. 1* *zeigt ein herkömmliches Lagersystem mit einer Steuereinrichtung 1 und der üblichen mechanischen Ausgestaltung. Die Steuereinrichtung 1 arbeitet auf Basis eines übergeordneten Materialflussrechners, MFR, und einer Lagerverwaltungssoftware, LVS, zur Weitergabe von Steuerungsbefehlen an eine untergeordnete speicherprogrammierbare Steuerung, SPS, die einen Motor ansteuert und einzelne Sensoren wie beispielsweise Lichtschranken auswertet.*
: *Damit ist es notwendig, dass der digitale Zwilling 4 in Verbindung mit der künstlichen Intelligenz oder der DRL separat von der realen Anlage Varianten testen kann, um ein Optimum zu erzielen. Dieser digitale Zwilling 4 wird zum Vorteil des Lagerbetreibers und dessen individuellen Gegebenheiten mit realen Daten aus der Anlage und realen Parameter-Settings gespeist. DRL testet gegen Emulation*/*Simulation der realen Anlage Veränderungen bei Parametern hinsichtlich verschiedener Ziele wie beispielsweise maximaler Durchsatz, kürzeste Durchlaufzeit, geringster Personaleinsatz, geringste Bewegungen*/*Verschleiß usw. Vorteilhafte Parameter-Settings werden anschließend auf die reale Anlage transferiert, wobei dies über den Konnektor 3 erfolgt. "*

Die DE 103 05 344 A1 betrifft ein System und Verfahren zur Steuerung von Aufträgen einer Fertigungsvorrichtung.

Die CN 113 743 876 A betrifft gemäß ihrer Zusammenfassung einen digitales Zwilling eines unbemannten Lagerverwaltungssystems für Kernkraftanlagen, das folgendes umfasst: ein Wahrnehmungsschichtmodul zum Erfassen von Qualitätsbetriebsdaten jeder Entität des unbemannten Ziellagers; ein Datenschichtmodul zum Speichern von Qualitätsbetriebsdaten jeder Entität des unbemannten Ziellagers sowie von Frachtauftragsdaten und Aufgabendaten; ein digitales Zwillingsspeichermodul zum Simulieren des Betriebs des unbemannten Ziellagers; und Entitätszwillingsmodelle, die jeweils allen Entitäten des unbemannten Ziellagers entsprechen; wobei das Serviceschichtmodul verwendet wird, um simulierte Betriebsdaten gemäß den Qualitätsbetriebsdaten jeder Entität des unbemannten Ziellagers, den Warenbestelldaten und den Aufgabendaten zu erzeugen; wobei dann wird der analoge Betriebsfluss des digitalen Zwillingsspeichermoduls kontinuierlich optimiert wird und entsprechende optimierte Konfigurationsdaten erzeugt werden; und wobei schließlich die Verwaltung und Entscheidung des unbemannten Ziellagers auf der Grundlage der optimierten Konfigurationsdaten realisiert wird. Das unbemannte Lagerverwaltungssystem kann das unbemannte Lager der Kernkraftanlage effektiv verwalten. Daher ist eine Aufgabe der vorliegenden Offenbarung, einen performanten, stetigen und resilienten Materialfluss in einem Intralogistiksystem vorzusehen. Ein performanter Materialfluss ist durchsatzoptimiert, wobei sich der Durchsatz z.B. auf eine Anzahl von erledigten Transportaufträgen pro Zeiteinheit und/oder auf eine Durchführungszeit eines Transportauftrags beziehen kann. In einem stetigen Materialfluss bewegen sich die Materialflussobjekte kontinuierlich, ohne dass es zu unerwarteten Stillständen, Wartezeiten, Blockaden oder Stauungen kommt. Ein resilienter Materialfluss reagiert flexibel auf zufällig auftretende Probleme.

Diese Aufgabe wird durch ein Intralogistiksystem gemäß Anspruch 1 gelöst.

Im Gegensatz zum klassischen Ansatz werden unerwartet auftretende Materialflussprobleme nicht erst zu dem Zeitpunkt gelöst, zu dem sie wirklich auftreten. Die Probleme werden auch nicht mit einem fest vordefinierten Regelwerk von Lösungen gelöst. Die Probleme werden durch die Simulation des Materialflusses frühzeitig antizipiert, ohne dass es erforderlich ist, die Probleme selbst genau zu definieren. Das Feststellen einer Durchsatzverschlechterung allein reicht aus, um aktiv zu werden. Die Lösung liegt in den veränderten Betriebsparametern der Transporteinrichtungen. Der Materialfluss wird nahezu beliebig oft während eines Simulations- und Optimierungszyklus für eine sehr große Anzahl unterschiedlicher Parametereinstellungen ausgehend von der kontinuierlich beobachteten IST Situation im Lager simuliert, um die entsprechenden Simulationsergebnisse, zu denen auch eine Simulation des Materialfluss ohne irgendeine Parameteränderung gehört, miteinander verglichen werden. Ein derart simulierter Materialfluss ist dann besser, wenn er in einem höheren Durchsatz als der Materialfluss resultiert, der ohne eine Parameteränderung simuliert wurde oder bei Erreichen vorgegebener Durchsatzwerte überall noch Kapazitätspuffer für das auswirkungsminimale Handling möglicher unerwarteter Ereignisse zu finden sind (Resilienz). Die Simulation läuft vorzugsweise bis zu dem Zeitpunkt, zu dem alle Transportaufträge erledigt sind, d.h. alle Handhabungseinheiten von ihrem Startpunkt zu ihrem Zielpunkt bewegt wurden.

Dies bedeutet mit anderen Worten, dass die Steuerung der vorliegenden Offenbarung intuitiv Materialflussprobleme identifizieren und lösen kann, ohne jedoch das Problem und/oder die Lösung vorab zu definieren. Es handelt sich hier um einen Prozess der ständigen Verbesserung.

Der Materialfluss des Gesamtsystems wird permanent wiederkehrend, d.h. zyklisch, analysiert und optimiert, und zwar jeweils basierend auf aktuellen Betriebszuständen. Die Optimierung ist dynamisch, im Gegensatz zur statischen (initialen) Materialflussplanung.

In Abhängigkeit von einer zu Verfügung stehenden Rechenleistung können die Simulations- und Optimierungszyklen sehr kurz und die Anzahl der veränderlichen Betriebsparameter sehr groß gewählt werden. Im Idealfall kommt es bei der vorliegenden Offenbarung zu keinen Materialflussproblemen (Staus, Verzögerungen, Kollisionen, etc.) mehr.

Der sich einstellende Materialfluss ist performant, stetig, energieeffizient und/oder resilient.

Vorzugsweise ist der Materialflussrechner eingerichtet: initial die Transportaufträge basierend auf Kommissionieraufträgen, Transportanforderungen und/oder Umlagerungsaufträgen, die z.B. (auch) von einem Lagerverwaltungssystem eingegeben werden können, zu planen, zu erzeugen und an die entsprechenden Transporteinrichtungen zu übertragen; vorzugsweise den Materialfluss kontinuierlich basierend auf den aktuellen Betriebszuständen zu koordinieren, indem im Falle eines Materialflussproblems eine Problemlösung basierend auf festen, vorab definierten Lösungsregeln implementiert wird; und die Betriebszustände von den Sensoren zu empfangen.

Der hier verwendete Materialflussrechner unterscheidet sich also nicht von klassischen Materialflussrechnern. Die vorliegende Offenbarung lässt sich somit auf Bestandssysteme anwenden, die bereits über einen klassischen Materialflussrechner verfügen. Die vorliegende Offenbarung stellt in diesem Sinne aber eine Erweiterung bestehender Intralogistiksysteme dar. Zu diesem Zweck kann es bereits ausreichen, das Bestandssystem um eine entsprechende Steuerungssoftware zu erweitern. Üblicherweise wird diese Software-Erweiterung aber auch mit einer parallelen Erweiterung der Hardware (Computer) einhergehen. Dann ist das Bestandsystem in der Lage, dynamisch auf Materialflussprobleme zu reagieren.

Insbesondere umfasst das Transportnetzwerk eine Vielzahl von Transport-Quellen und eine Vielzahl von Transport-Zielen, die über eine Vielzahl von Transportwegen miteinander verbunden sind, wobei jeder der Transportaufträge einen Handhabungseinheiten-spezifischen Transportweg von einer der Quellen zu einem der Ziele definiert. Die Transportaufträge umfassen die Betriebsparameter vorzugsweise nicht.

Die Betriebsparameter stellen bei der klassischen Materialflussplanung also normalerweise keinen veränderlichen Wert dar. Die klassische Planung erfolgt auf Basis von festen voreingestellten Parameterwerten, die aber Toleranzbereiche umfassen können, die wiederum auf Erfahrungswerte zurückgehen.

Vorzugsweise resultiert die Durchsatzverbesserung in einer höheren Anzahl von erledigen Transportaufträgen pro Zeiteinheit im Vergleich zum Materialfluss, der basierend auf den jeweiligen aktuellen Betriebszuständen ohne variierende Betriebsparameter simuliert wird.

Die Durchsatzverbesserung stellt sich tatsächlich ein, selbst dann, wenn der tatsächlich erzielte Durchsatz schlechter als ein ursprünglich geplanter Durchsatz ist. Dieser tatsächliche Durchsatz ist immer noch besser als der Durchsatz, der sich einstellen würde, wenn die (sich unerwartet einstellenden) Materialflussprobleme allein mit dem festen Lösungswerkzeug behandelt würden.

Außerdem ist es von Vorteil, wenn die entsprechend variierten Betriebsparameter, die an die entsprechenden Transporteinrichtungen zu übertragen sind, die Transportaufträge unverändert lassen.

Die vorliegende Offenbarung plant den Materialfluss (als solchen) also nicht neu, sondern verändert den initial geplanten Materialfluss wiederkehrend durch kleinere, ggf. momentan kaum wahrnehmbare, Änderungen zu einem am Ende deutlich wahrnehmbaren besseren Durchsatz. Der klassische Materialflussrechner bekommt gar nicht mit, dass der Materialfluss von außen, nämlich durch den digitalen Zwilling des Materialflusses, beständig durch die Veränderung der Betriebsparameter der Transporteinrichtungen zum Positiven beeinflusst wird.

Vorzugsweise umfassen zumindest einige, vorzugsweise alle, der Transporteinrichtungen jeweils mindestens einen der Sensoren.

Damit die Rückkopplungsschlaufe über die aktuellen Betriebszustände funktioniert, ist es erforderlich, dass die über ihre Betriebsparameter beeinflussbaren

Transporteinrichtungen, die wiederum den Materialfluss implementieren, hinreichend oft wiederkehrend ihre Betriebszustände an die überlagerte Steuerung zurückmelden. Deshalb ist es von Vorteil, wenn die entsprechenden Sensoren direkt in die Transporteinrichtungen integriert sind.

Natürlich ist es auch möglich, Sensoren einzusetzen, die die Betriebszustände des Materialflusses und/oder der Transporteinrichtungen von außen bzw. indirekt erfassen. Dort ist jedoch die Zuordnung einer erfassten Zustandsänderung zu der oder den Transporteinrichtungen aufwändiger.

Insbesondere umfassen die Transportrichtungen Unstetigförderer, wie z.B. fahrerlose Transportsysteme, RGBs, Weichen, Lifte, Umsetzer und dergleichen, und/oder Stetigförderer, wie z.B. Rollenförderer, Bandförderer, Kettenförderer und/oder Hängeförderer.

Die vorliegende Offenbarung ist also auf beide Typen von klassischen Fördereinrichtungen anwendbar. Die vorliegende Offenbarung ist auf jedes erdenkliche Materialflussproblem anwendbar. Somit ist die vorliegende Offenbarung auch auf jedes Bestandsystem anwendbar, das sich zur Implementierung des Materialflusses, wie üblich, aus Unstetigförderern und/oder Stetigförderern zusammensetzt.

Vorzugsweise weist das Intralogistiksystem ein Lager- und Kommissioniersystem auf, das ferner mindestens einen der nachfolgenden Funktionsbereiche aufweist: ein Lager; einen Wareneingang; einen Warenausgang; eine Arbeitsstation; und/oder eine Produktion.

Die vorliegende Offenbarung ist also auf alle gängigen intralogistischen Anwendungen anwendbar. Sie kann im Bereich der Produktionsintralogistik wie auch im klassischen Kommissionierumfeld (z.B. Distributionszentren) eingesetzt werden.

Des Weiteren wird die oben genannte Aufgabe durch ein Verfahren, gemäß Anspruch 9, zum verbesserten Implementieren eines initial geplanten Materialflusses in einem Intralogistiksystem gelöst.

Auf diese Weise stellen sich die Vorteile ein, die bereits oben im Zusammenhang mit dem Intralogistiksystem diskutiert wurden.

Vorzugsweise werden die Transporteinrichtungen mit den variierten Betriebsparametern betrieben, ohne die initial geplanten und erzeugen Fahraufträge selbst zu verändern.

Das Verfahren der vorliegenden Erfindung ist also auch in Bestandssystem einsetzbar.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Offenbarung zu verlassen.

Ausführungsbeispiele sind in den Zeichnungen dargestellt und werden in der nachfolgenden Beschreibung noch nähert erläutert.
- Fig. 1: zeigt ein Blockdiagramm eines Intralogistiksystems, das exemplarisch als Lager- und Kommissioniersystem implementiert ist.
- Fig. 2: zeigt ein Blockdiagramm möglicher Transporteinrichtungen.
- Fig. 3: zeigt ein schematisch veranschaulichtes Transportnetzwerk.
- Fig. 4: zeigt eine Vielzahl von exemplarischen Transportaufträgen in tabellarischer Form.
- Fig. 5: veranschaulicht eine Funktionsweise eines digitalen Zwillings.
- Fig. 6: zeigt eine erste Architekturvariante (Fig. 6A) und eine zweite Architekturvariante (Fig. 6B) eines digitalen Materialfluss-Zwillings.
- Fig. 7: zeigt ein Flussdiagramm zur Implementierung eines Materialflusses unter Verwendung eines klassischen Materialflussrechners.
- Fig. 8: veranschaulicht ein Beispiel eines vorbekannten Materialflusses.

Nachfolgend wird unter dem Begriff "Materialfluss" (MF) der einleitend definierte, allgemeine Begriff verstanden, der aber im Wesentlichen auf die Gesamtheit aller zeitabhängigen örtlichen Veränderungen (d.h. auf die Transportbewegungen) der MF-Objekte (Handhabungseinheiten, wie z.B. Lagereinheiten, Werkstücke, Fördergüter, etc.) beschränkt ist, die durch Transportaufträge 22 verursacht werden. Veränderungen der MF-Objekte selbst hinsichtlich einer Menge, Qualität und/oder Zusammensetzung der MF-Objekte werden zur Vereinfachung der Darstellung nachfolgend nicht näher betrachtet, obwohl sie möglich sind. Jedes MF-Objekt bewegt sich gemäß seinem Transportauftrag 22 von einer Quelle zu einem Ziel, wozu üblicherweise ein Transportweg 24 aus einer Vielzahl von unterschiedlichen Transportwegen 24 von einem Materialflussrechner (MFR) 30 ausgewählt wird, wie unten unter Bezugnahme auf die Fig. 1 bis 4 noch näher erläutert werden wird.

Um Objekte des MF, d.h. Handhabungseinheiten (Lagereinheiten, Fördergüter, Werkstücke, Stückgüter, etc.), durch ein Intralogistiksystem 10, wie z.B. ein Lager- und Kommissioniersystem 12, zu bewegen, wird ein Transportnetzwerk 14 aus mehreren Transporteinrichtungen 15 verwendet, vgl. Fig. 1. Das Transportnetzwerk 14 wird im Wesentlichen aus den Transporteinrichtungen 15 gebildet. Dabei kann es Transporteinrichtungen 15 mit veränderlichen Betriebsparametern 36 und ohne veränderliche Betriebsparameter 36 geben. Die Wirkung der vorliegenden Offenbarung wird mit den Transporteinrichtungen 15 erzielt, deren Betriebsparameter 36 veränderlich sind.

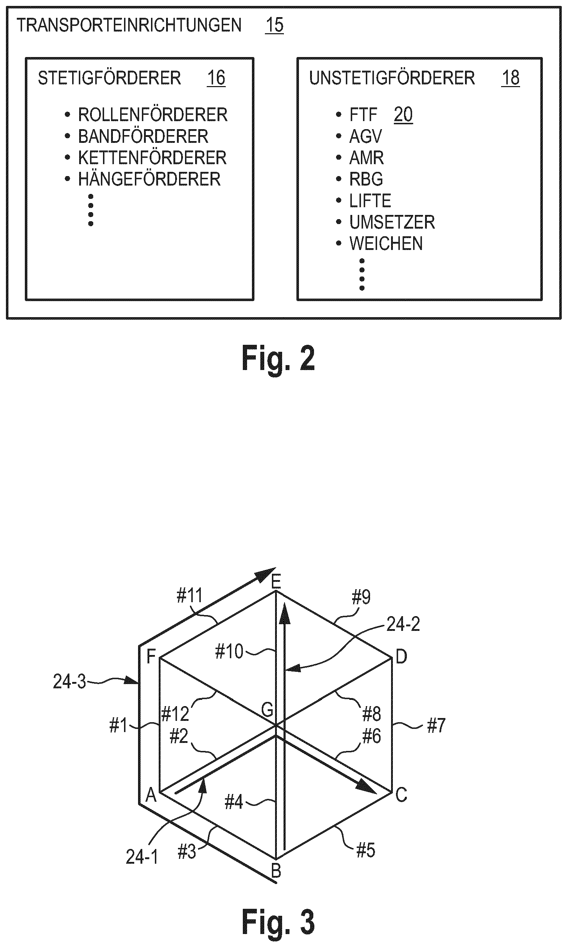

Die Transporteinrichtungen 15 sind miteinander zu einem (Transport-)Netzwerk 14 verbunden, siehe auch Fig. 3. Die Transporteinrichtungen 15 umfassen einen oder mehrere (modulare) Stetigförderer 16 und/oder einen oder mehrere Unstetigförderer 18, siehe Fig. 2.

Die Stetigförderer 16 arbeiten kontinuierlich und sind zumeist ortsfest installiert. Sie verfügen über eine hohe Förderleistung, die z.B. in Anzahl von transportierten Handhabungseinheiten/Zeiteinheit gemessen wird, und produzieren einen kontinuierlichen bzw. quasikontinuierlichen Förderstrom bzw. MF. Die kontinuierliche Arbeitsweise und einfache Funktion ermöglichen eine gute Automatisierbarkeit und Kontrolle des MF im Transportnetzwerk 14. Die entsprechenden Fördertechnikmodule können durch Rollenförderer, Bandförderer, Kettenförderer, Hängeförderer und/oder Ähnliches gebildet werden.

Die Unstetigförderer 18 sind bewegliche Fördereinheiten, wie z.B. fahrerlose Transportfahrzeuge (FTF) 20, die die Handhabungseinheiten von einer Quelle zu einem Ziel verfahren. Sie können beliebige Punkte entlang einer Linie oder in einer Fläche oder im Raum anfahren. Die FTF 20 eignen sich zur Bedienung vieler Quellen und Ziele, zum Transport schwerer Handhabungseinheiten und zur Überbrückung langer Strecken. Je nach Ausprägung des Transportnetzwerks 14 steigt mit der Einsatzflexibilität auch ein Steuerungsaufwand und die Anforderungen an die Automatisierung. Die Unstetigförderer 18 können auch automatisiert (zwangs-) geführte Fahrzeuge (AGVs), autonom bewegliche Roboter (AMRs), klassische Regalbediengeräte (RBG) und Ähnliches umfassen.

In der Fig. 3 ist eine mögliche Ausgestaltung des Transportnetzwerks 14 der Fig. 1 schematisch veranschaulicht. Es sind eine Vielzahl von Punkten A-G und eine Vielzahl von Transportstrecken #1 bis #12 gezeigt, die Punkte A-G miteinander verbinden. Die Punkte A-G können Quellen und/oder Ziele des MF sein, die Start- und Endpunkte der oben erwähnten Transportwege 24 definieren, die sich aus einer oder mehreren Strecken zusammensetzen. Die Punkte A-G können auch Verzweigungs- und Kreuzungspunkte des MF darstellen. Im digitalen Zwilling gibt es keine grundsätzlich bevorzugten Transportstrecken hinsichtlich einer Optimierung des MF. Die Auswahl des situationsbedingt optimalen Förderweges stellt, neben der Betriebsparameterjustierung, eine weitere Optimierungsmöglichkeit im MF dar.

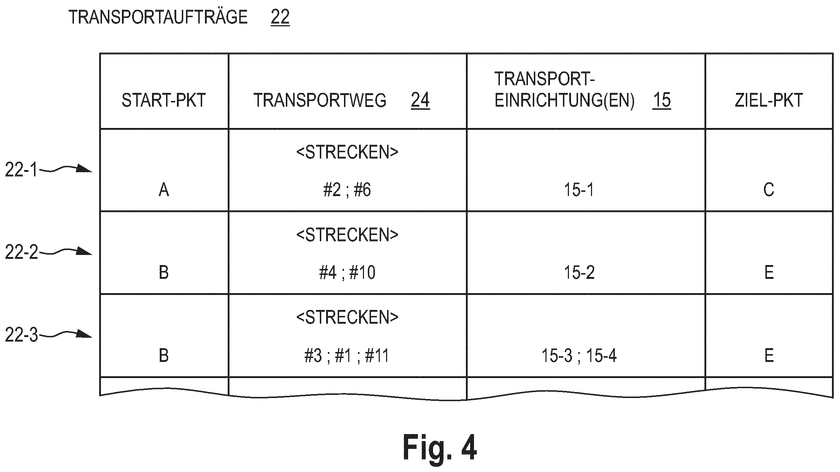

In Fig. 4 sind exemplarische Transportaufträge 22-1 bis 22-3 für das Netzwerk 14 der Fig. 2 tabellarisch veranschaulicht. Jeder der Transportaufträge 22 definiert einen Startpunkt, einen Zielpunkt und einen Weg 24 zwischen diesen Punkten. Außerdem definiert jeder der Aufträge 22 einen Startzeitpunkt und einen (berechneten, prognostizierten) Endzeitpunkt. Jeder der Aufträge 22 ist einer (oder mehreren) spezifischen Handhabungseinheiten zugeordnet, was ebenfalls im jeweiligen Auftrag 22 hinterlegt ist. Es versteht sich, dass die Transportaufträge 22 zusätzlich zu den in Fig. 4 gezeigten Eigenschaften eine oder mehrere der nachfolgenden Informationen (nicht dargestellt) umfassen können, wie z.B.: den Startzeitpunkt, den Endzeitpunkt, eine Handhabungseinheit-ID, ein Priorisierungsniveau und Ähnliches, was zur weiteren Spezifizierung eines Transportauftrags 22 nützlich sein kann.

Der Transportauftrag 22-1 der Fig. 4 repräsentiert einen exemplarischen Transport einer Handhabungseinheit (nicht veranschaulicht) vom Punkt A (Quelle) zum Punkt C (Ziel) über die Strecken #2 und #6, wobei dieser Transport von der Transporteinrichtung 15-1 durchzuführen ist, z.B. von einem FTF 20 (vgl. Fig. 2). Wenn eine der Strecken #1 bis #12 durch einen Stetigförderer 16 implementiert ist, ist die diesbezügliche Spezifikation der Transporteinrichtung 15 nicht erforderlich. In diesem Fall können aber z.B. Übergabezeitpunkte bestimmt und festgelegt werden. Die zeilenförmig dargestellten Transportaufträge 22-2 und 22-3 der Fig. 4 definieren zwei Transportwege 24-2 und 24-3, die beide im Punkt B starten und im Punkt E enden, sich aber unterschiedlich durch das Netzwerk 14 der Fig. 3 erstrecken.

Das Intralogistiksystem 10 der Fig. 1 umfasst neben dem Transportnetzwerk 14 eine Steuerung 26 und Sensoren 28. Die Steuerung 26 umfasst einen realen (klassischen) Materialflussrechner (MFR) 30 (Hardware und Software) und einen digitalen Materialfluss-Zwilling, d.h. einen digitalen Zwilling des Materialflusses (DZ-MF) 32 (Software). Die Steuerung 26 wird durch einen oder mehrere Computer und ein oder mehrere Steuerungsprogramme (Software) implementiert. Die MF-Steuerungsvorgänge, d.h. insbesondere die Koordinierung der Transportaufträge 22, kann zentral (durch den MFR 30) oder dezentral (MFR 30 in Kombination mit z.B. untergeordneter Transporteinrichtungssteuerung) erfolgen, und zwar basierend auf (aktuellen) Betriebszuständen 34, die von den Sensoren 28 an die Steuerung 26 zurückgemeldet werden, um die Umsetzung der Aufträge 22 zyklisch zu verifizieren. Die Zustände 34 können an den MFR 30 und/oder an den DZ-MF 32 kommuniziert werden, die Zustände 34 untereinander austauschen können.

Der MFR 30 ist eingerichtet, die Transportaufträge 22 initial zu planen und zu erzeugen sowie danach kontinuierlich zu koordinieren, wie eingangs erwähnt. Die Transportaufträge 22 werden z.B. durch Kommissionieraufträge (nicht dargestellt) hervorgerufen, um z.B. Lagerbehälter (Handhabungseinheit) aus ihren jeweiligen Lagerplätzen (Startpunkt) auszulagern und zu einer Arbeitsstation (Zielpunkt) zu transportieren, wo eine Person oder ein Roboter gelagerte Artikel aus dem oder den Lagerbehältern entnimmt und an einen Auftragsbehälter (weitere Handhabungseinheit) abgibt, der gemäß einem anderen Transportauftrag 22 ebenfalls (zeitlich und örtlich synchronisiert) zur Arbeitsstation transportiert wird. Der MFR 30 kommuniziert die initial erzeugten Transportaufträge 22 an die beteiligten Transporteinrichtungen 15 (und deren Steuerungen, sofern vorhanden), die diese Aufträge 22 dann entsprechend umsetzen, ggf. unter zusätzlicher Koordination durch den MFR 30.

Die Sensoren 28 erfassen, als Sensordaten, Betriebszustände 34 des MF, des Transportnetzwerks 14 und der Transporteinrichtungen 15. Einige der Sensoren 28 können separat zu den Transporteinrichtungen 15 vorgesehen sein, wie z.B. im System 10 zentral positionierte Kameras, die 2D-Bilder von ganzen Bereichen (z.B. vom Lager) liefern, aus denen mittels Bildverarbeitung Informationen (Belegungszustand, Verkehrsdichte, etc.) über den MF auf einer oder mehreren Strecken extrahiert werden können. Andere der Sensoren 28 sind direkt in die Transporteinrichtungen 15 integriert, wie z.B. Geschwindigkeits-, Positions- und Abstandssensoren in den FTF 20 oder Lichtschranken, Gewichtssensoren und Scanner am Ein/Ausgang der Stetigförderer 16.

Die erfassten Betriebszustände 34 werden von den Sensoren 28 über entsprechend eingerichtete Schnittstellen (inkl. Protokollen, nicht gezeigt) an die Steuerung 26 (verdrahtet und/oder drahtlos) übertragen. Die Sensordaten stellen Eingangsdaten für den MFR 30 und den DZ-MF 32 dar. Die Sensordaten werden zur Synchronisierung des realen MF mit einem simulierten Materialfluss, der zyklisch vom DZ-MF 32 erzeugt wird, verwendet.

Exemplarische Betriebszustände 34 sind: Belegtzustände der Transporteinrichtungen 15; Transportgeschwindigkeiten der Transporteinrichtungen 15; (aktuelle) Positionen der (beweglichen) Transporteinrichtungen 15; aktuelle Motorströme bzw. -spannung; aktuelle Ladezustände von Energiespeichern und Ähnliches. Die Betriebszustände 34 verändern sich, so dass sie von der Steuerung 26 überwacht werden, um im Falle von (unerwarteten) Änderungen situativ reagieren zu können.

Der DZ-MF 32 ist eingerichtet, den realen MF innerhalb des Transportnetzwerks 14 virtuell bzw. digital nachzubilden, indem er ein Materialfluss-Simulationsmodell (MF-Modell) 40 verwendet, wie es unten noch näher erläutert werden wird.

Allgemein versteht man unter digitalen Zwillingen (DZ) virtuelle Abbilder materieller und/oder immaterielle Objekte aus der realen Welt. Eines dieser Objekte ist im vorliegenden Fall der Materialfluss. Die virtuellen Abbilder weisen (Funktions-)Modelle, Simulationen und/oder Algorithmen auf, die die Eigenschaften und Verhaltensweisen der realen Objekte so exakt wie möglich in der virtuellen Welt wiedergeben. Die Wechselwirkungen der Objekte in der Realität werden immer komplexer. Zusammenhänge und Abhängigkeiten der Objekte voneinander sowie Auswirkungen ihrer Veränderungen sind (in der Realität) immer schwieriger abzuschätzen. Daher hat der DZ eine so große Bedeutung. Der DZ ermöglicht es, ein virtuelles Abbild der Realität zu schaffen. An dem virtuellen Abbild können (Parameter-) Veränderungen vorab durch eine Simulation getestet werden.

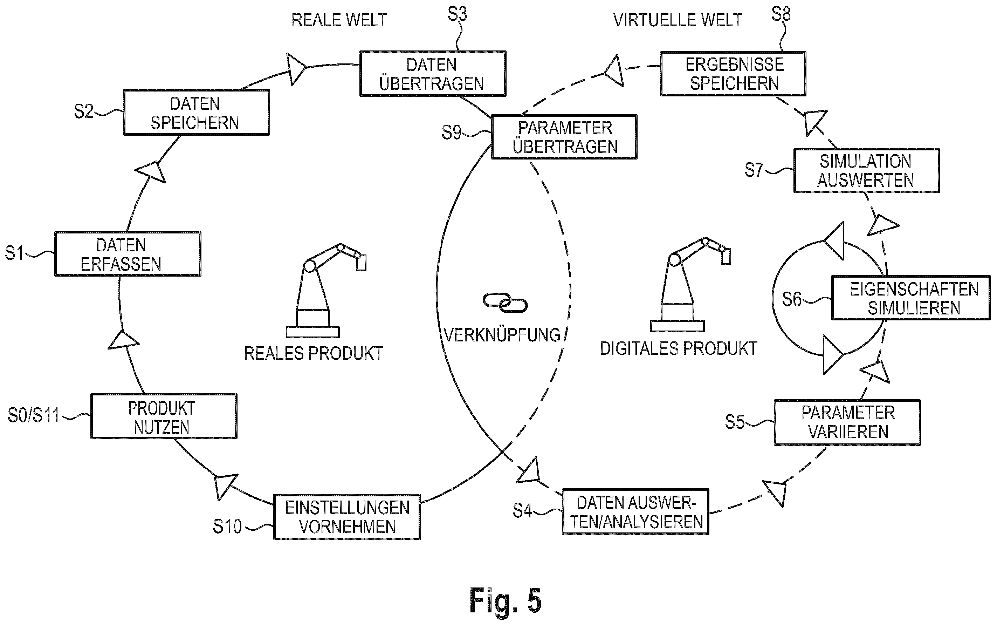

Ein allgemeines Ziel der Verwendung von DZ ist es, neue Lösungsansätze, geplante Änderungen und neue Techniken zuerst in der virtuellen digitalen Welt zu simulieren und optimieren, bevor diese dann in die reale Welt transferiert werden. Fig. 5 veranschaulicht die Funktionsweise eines klassischen DZ.

In der Fig. 5 werden zuerst Daten, die von einem realen Objekt, wie z.B. einem FTF 20, das eine Handhabungseinheit von A nach B transportiert, verursacht werden, in der realen Welt sensorisch erfasst (S1), gespeichert (S2) und dann mittels einer Verknüpfung (Schnittstelle) an einen digitalen Zwilling, wie z.B. an den DZ-MF 32 der Fig. 1, übertragen (S3). In der virtuellen Welt können diese Sensordaten analysiert und ausgewertet (S4) werden, z.B. indem der Materialfluss basierend auf den initial bereits festgelegten Transportaufträgen und den aktuellen Sensordaten (Betriebszustände 34 in Fig. 1) erneut simuliert wird, wobei die Simulation mit dem Simulationsmodell des MFR 30 oder mit einem anderen Simulationsmodell durchgeführt werden kann. Dann werden die (Betriebs-)

Parameter 36 variiert (S5), um die Funktionsweise des virtuell abgebildeten Objekts mit der jeweiligen Parametereinstellung (für jeden veränderten Parameter) erneut zu simulieren (S6). Jede mögliche Parameteränderung, die auch einen Satz von veränderten Parametern 36 umfassen kann, kann also simuliert werden, um anschließend die Simulationsergebnisse (mit und ohne Parameteränderung) auszuwerten (S7). Die Simulationsergebnisse werden zu diesem Zweck analysiert, indem sie miteinander verglichen und nach einem oder mehreren vorgegebenen Kriterien (z.B. erhöhter Durchsatz, kürzere Durchlaufzeit, kürzere Gesamtbearbeitungszeit, reduzierter Verschleiß, reduzierte Betriebskosten, gleichmäßigere Auslastung, geringerer Personaleinsatz, etc.) gewichtet bzw. bewertet werden, um eine optimale Parametereinstellung aus der Vielzahl der simulierten Parametereinstellungen zu bestimmen. Diese Ergebnisse, und insbesondere die optimale bzw. optimierte Parametereinstellung, können gespeichert werden (S8), und der oder die optimalen Betriebsparameter 36 werden, von der Steuerung 26 und insbesondere vom DZ-MF 32, über die Schnittstelle an das reale Objekt (Transporteinrichtung 15) zurück übertragen (S9), vgl. auch Fig. 1. Das reale Objekt übernimmt die optimierte Parametereinstellung (S10) und arbeitet fortan mit dieser Einstellung (S11), bis es in einem zukünftigen Zyklus ggf. eine neue Parametereinstellung erhält. Danach kann sich der oben beschriebene Vorgang ab dem Schritt S1 wiederholen, um einen Prozess einer ständigen Verbesserung einzuleiten und zu implementieren. Die in Fig. 5 visualisierte liegende Acht verdeutlicht die zyklisch optimierende Beeinflussung der realen Welt durch den DZ recht anschaulich. Es versteht sich, dass die Anforderungen an die Rechenleistung des DZ-MF 32 um so höher werden, je kürzer die Zykluszeit gewählt wird und je mehr Parameter 36 pro Zyklus variiert werden.

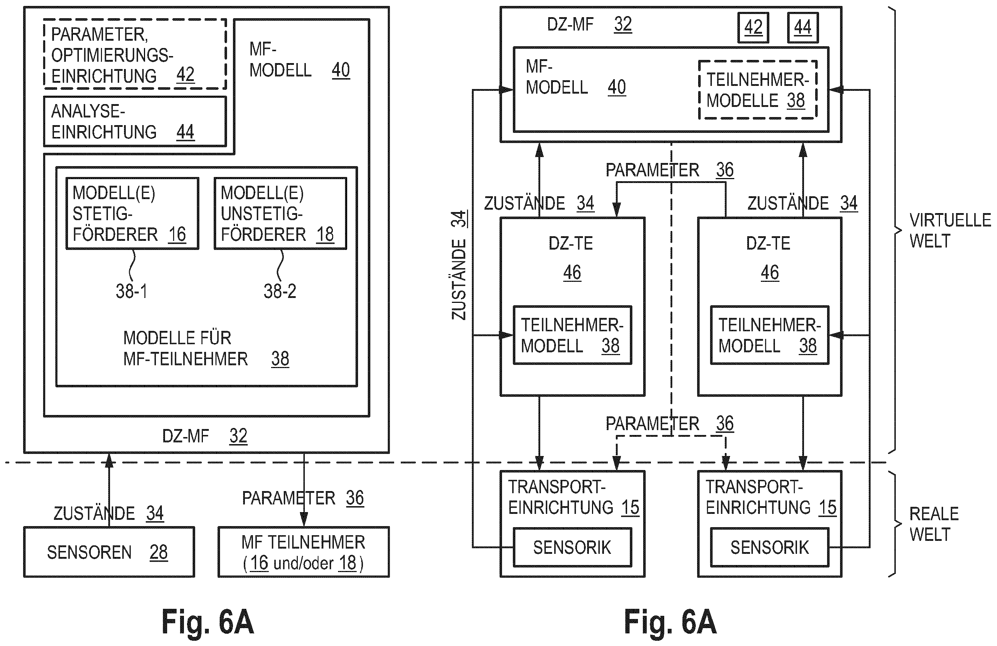

Mögliche Hierarchien des DZ-MF 32 der Fig. 1 sind in den Fig. 6A und 6B näher veranschaulicht. Fig. 6A zeigt eine erste einheitliche Variante und Fig. 6B zeigt eine zweite verteilte Variante einer DZ-Architektur.

Im Falle der einheitlichen Architektur des DZ-MF 32 in Fig. 6A sind die (Simulations-) Modelle 38 für MF-Teilnehmer (d.h. Transporteinrichtungen 15) in das MF-(Simulations- )Modell 40 integriert. Die Teilnehmer-Modelle 38 umfassen Simulationsmodelle 38-1 für die realen Stetigförderer 16 und/oder Simulationsmodelle 38-2 für die realen Unstetigförderer 18. Das MF-Modell 40 simuliert den MF, indem ein Ablauf von Transportvorgängen basierend auf den realen Transportaufträgen 22 des MFR 30, die durch die Transporteinrichtungen 15 durchgeführt werden, virtuell nachgebildet werden, wobei zusätzlich die Betriebszustände 34 der Sensoren 28 berücksichtigt werden, um den oben beschriebenen Parameteroptimierungsvorgang mittels einer Parameteroptimierungseinrichtung 42 durchzuführen, die von dem DZ-MF 32 umfasst ist. Der DZ-MF 32 umfasst ferner eine Analyseeinrichtung 44, die eingerichtet ist, den Schritt S7 auszuführen. Die Analyseeinrichtung 44 vergleicht die verschiedenen, auf verschiedenen Parametern, simulierten Materialflüsse mit dem simulierten Materialfluss, bei dem Parameter unverändert sind, und bewertet diese aus dem Blickpunkt eines verbesserten Durchsatzes. Der Durchsatz kann sich z.B. ausdrücken durch: eine erhöhte Anzahl abgeschlossener Transportaufträge 22 pro Zeiteinheit; kürzere Durchlaufzeiten, d.h. kürzere Zeiten zum Abschließen eines Auftrags 22; eine kürzere Gesamtbearbeitungszeit, d.h. eine kürzere Zeit zum Abschließen aller Aufträge 22; einen reduzierten Verschleiß, z.B. eines Antriebsmotors, der weniger stark belastet wird; reduzierte Betriebskosten; eine gleichmäßigere Auslastung; einen geringerer Personaleinsatz, und Ähnliches.

Das Gleiche gilt für die verteilte Architektur der Fig. 6B. Dort sind die Teilnehmer-Modelle 38 von jeweiligen digitalen Teilnehmer-Zwillingen bzw. digitalen Transporteinrichtungs-Zwillingen 46 umfasst, die separat zum DZ-MF 32 vorgesehen sein können. Der DZ-MF 32 und die DZ 46 der Transporteinrichtungen 15 sind unabhängig voneinander vorgesehen und unabhängig voneinander funktionsfähig. Der DZ-MF 32 simuliert den MF basierend auf dem MF-Modell 40, das aber auch die MF-Teilnehmer-Modelle 38 (identisch oder in vereinfachter Form) umfassen kann. Daneben existieren die digitalen Zwillinge für zumindest einige, und vorzugsweise alle, der Transporteinrichtungen 15, d.h. DZ-TE 46. Die DZ-TE 46 simulieren die Funktionsweisen ihrer jeweiligen Transporteinrichtungen 15 und können - neben dem Durchsatz - zusätzliche Leistungsverbesserung für die jeweilige Transporteinrichtung 15 bewirken, indem deren Betriebsparameter 36 basierend auf den realen Betriebszuständen 34, die von deren Sensoren 28 geliefert werden, in der Simulation wiederholt optimiert und unter anderen Gesichtspunkten bewertet werden, um die anders optimierten Parameter 36 in der Realität zu benutzen.

So ist es z.B. möglich, ein Strom- und Spannungsverhalten eines Akkus eines FTF 20 zu überwachen, um das entsprechende Modell 38 in die Lage zu versetzen, überdurchschnittliche Entladungen aufgrund von Alterung oder einen Verschleiß-bedingten Ausfall des Akkus zu antizipieren. Einer oder mehrere Betriebsparameter 36 dieses FTF 20 könnten so geändert werden, dass das FTF 20 länger als prognostiziert einsetzbar ist oder rechtzeitig vor dem antizipierten Ausfall gewartet werden kann. Der antizipierte Ausfall stellt aber auch einen Betriebszustand 34 dar, der an den DZ-MF 32 kommuniziert werden kann, um wiederum durch den DZ-MF 32 berücksichtigt zu werden.

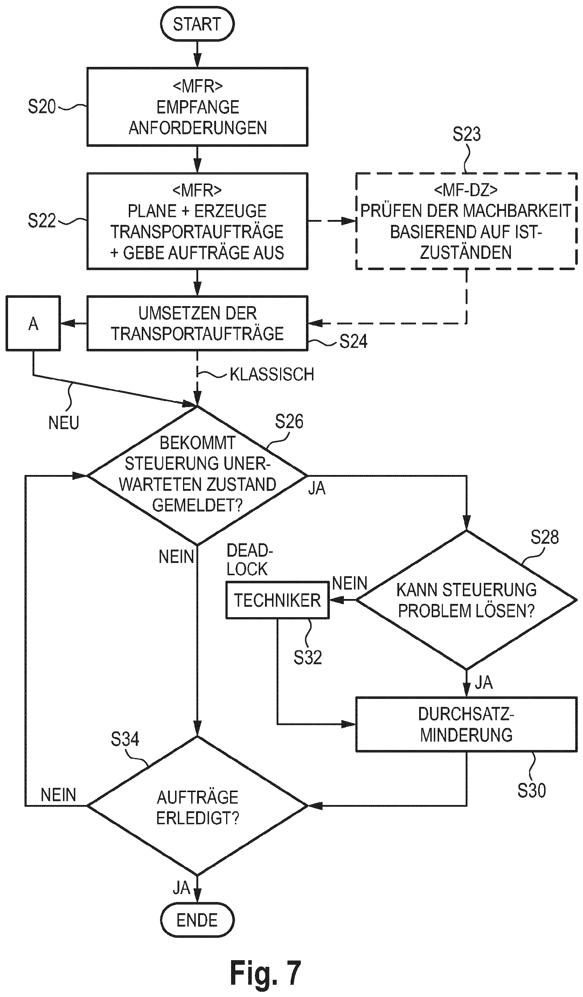

Nachfolgend werden einige Beispiele für unerwartet auftretende Probleme im MF beschrieben, die ein klassischer MFR 30 bisher, d.h. ohne eine Unterstützung durch den DZ-MF 32, nur schlecht bis gar nicht lösen konnte. Hierzu wird auf das Flussdiagramm der Fig. 7 Bezug genommen.

Der MFR 30 empfängt Anforderungen (Kommissionieraufträge, Umlagerungsaufträge, Transportanforderungen, etc.) von außen, z.B. von einer Kommissionierauftragsverwaltung (nicht dargestellt) und/oder von einem Lagerverwaltungssystem (nicht dargestellt), siehe Schritt S20. Danach plant und erzeugt der MFR 30 initial die entsprechende Transportaufträge 22, ggf. auf Basis einer Materialflusssimulation, die mit den entsprechenden Anforderungen anfangs und einmalig gespeist wird. Bei der Planung kann der MFR 30 einen voreingestellten Satz von Betriebsparametern 36 der Transporteinrichtungen 15 verwenden. Der MFR 30 bestimmt die Transportaufträge 22 z.B. auf Basis von aktuell implementierten Logiken durchsatzoptimiert, wobei der MFR 30 zu diesem Zwecke bereits Verzögerungen mit einkalkulieren kann, die aus Erfahrungswerten gewonnen wurden. Die so erzeugten, initialen Transportaufträge 22 werden an die entsprechenden Transporteinrichtungen 15 kommuniziert, siehe Schritt S22. Optional können die so geplanten und erzeugten Transportaufträge 22 hinsichtlich einer Machbarkeit bzw. Umsetzbarkeit von der Steuerung 26, insbesondere vom DZ-MF 32, basierend auf Ist-Zuständen 34 (vorab) verifiziert werden, siehe Schritt S23, bevor mit der eigentlichen Umsetzung im Schritt S24 begonnen wird.

Die Transporteinrichtungen 15 beginnen dann mit der Umsetzung der Aufträge 22 (Schritt S 24), die in dem (initial geplanten) Materialfluss resultieren, solange sich kein unerwarteter Betriebszustand 34 des Materialflusses und/oder der Transporteinrichtungen 15 einstellt. Bis hier unterscheidet sich das Verfahren der vorliegenden Offenbarung nicht vom klassischen Verfahren.

Tritt im klassischen Ansatz ein unerwartetes Problem spontan auf (für zwei FTF 20 droht z.B. eine Kollision, weil eines der FTF 20 langsamer als erwartet gefahren ist; oder ein Förderer kann z.B. sein Fördergut nicht abgeben, weil der aufnehmende Förderer belegt ist, etc.), liefern die zugehörigen Sensoren 26 diesen (unerwarteten) Betriebszustand 34 entweder direkt an die Steuerung 26 bzw. den MFR 30 oder an eine beteiligte (dezentrale) Untersteuereinheit (z.B. an die FTF-Steuerung oder an die Förderersteuerung), siehe Schritt 26. Wenn der MFR 30 und/oder die Untersteuereinheit in der Lage sind, dieses Problem auf Basis eines vorab definierten Regelwerks von möglichen Lösungen (z.B.: wer eine höhere Priorität hat, hat Vorfahrt; wer die größere Verspätung hat, darf zuerst, etc.), die an sich unveränderbar sind, zu lösen, was in einem Schritt S28 geprüft wird, indem z.B. entsprechende Zustände 34 zurückgemeldet werden, kommt es zwar faktisch zu einer Durchsatzminderung bzw. -verschlechterung (Schritt S30), aber zu keinem schlimmeren Systemstillstand, der nur von einem Wartungstechniker durch einen Eingriff von außen lösbar ist (Schritt S32). Der Eingriff von außen stellt die letzte Lösungsmöglichkeit des vorbekannten Regelwerks dar. Der MF wird fortgesetzt, bis alle Aufträge 22 erledigt, d.h. abgeschlossen, sind. Treten währenddessen erneut unerwartete Betriebszustände 34 auf, werden klassisch wieder einige der Schritte S26-S32 durchgeführt.

Die vorliegende Offenbarung schaltet dem klassischen Problemlösungsansatz aber den DZ-MF 32 vor, siehe Block A und Fig. 5.

Der Block A der Fig. 7 entspricht dem Optimierungsverfahren der Fig. 5, dass den DZ-MF 32 einsetzt, um für die an der Umsetzung des MF beteiligten Transporteinrichtungen 15 zyklisch Betriebsparameter 36 zu finden, die in einem besseren Durchsatz resultieren, als es der auf den aktuellen Betriebszuständen 34 simulierte Materialfluss ohne Parameteränderungen in der Prognose erwarten lässt.

Der digitale Materialfluss-Zwilling 32 antizipiert z.B. die sich in der Zukunft abzeichnende Kollision zwischen den zwei FTF 20 oder das Übergabeproblem der aneinandergrenzenden Stetigförderer 16 lange bevor sich diese Zustände tatsächlich einstellen. Der DZ-MF 32 verhindert im besten Fall, dass es in der Zukunft zu diesen Zuständen kommt. Der DZ-MF 32 ändert die Betriebsparameter (intuitiv) im Rahmen seiner Parameteroptimierung, indem z.B. die Transportgeschwindigkeit von einem (oder beiden) der FTF 20 oder von dem zuführenden Stetigförderer 16 so verändert wird, dass es gar nicht zur Kollision oder zur verzögerten Abgabe kommt. Die Transportgeschwindigkeit stellt in diesem Fall den veränderlichen Betriebsparameter 36 dar. Der Parameter 36 könnte aber auch eine (alternative) Strecke im Weg 24 sein, wobei in diesem Fall der Transportauftrag 22 selbst verändert würde. Der Wahl möglicher Transporteinrichtungen und deren Parametereinstellungen sind keine Grenzen gesetzt. Der DZ-MF eliminiert nicht zielführende Einstellungen und findet eine optimale Einstellung, insbesondere im Rahmen der zur Verfügung stehenden Rechenzeit und der verwendeten Optimierungsalgorithmen.

Der DZ-MF 32 verhindert das Problem somit nicht durch die Anwendung von vorab definierten, festen Lösungen, sondern durch (mindestens) eine der vielen Parametervariationen, die sich während des aktuellen Simulationszyklus als vorteilhaft herausgestellt haben. Im Idealfall werden gar keine unerwarteten Betriebszustände 34 mehr an die Steuerung 26 zurückgemeldet (Schritt S26), so dass die den Materialfluss repräsentierenden Transportaufträge 22 allein auf Basis der Parameteränderungen mit einem Durchsatz erledigt werden (Schritt S34), der gegenüber einer Umsetzung der initial geplanten Transportaufträgen 22 eine deutliche Verbesserung darstellt, selbst wenn der auf diese Weise tatsächlich erzielte Durchsatz schlechter als der ursprünglich während der Initialplanung veranschlagte Durchsatz ist.

Selbstverständlich kann es trotz des Blocks A dennoch zu Materialflussstörungen kommen, die nur klassisch behoben werden können. Die Wahrscheinlichkeit für derartige Störungen ist aber bedeutend geringer als beim klassischen Ansatz.

Ferner versteht es sich, dass die oben beschriebenen Effekte auch erzielbar sind, wenn der MF nicht im gesamten Transportnetzwerk 14 über die Betriebsparameter 36 optimiert wird, sondern nur in einem Teilbereich des Netzwerks, wie z.B. in einer Lager-Vorzone. In diesem Fall stellt die Fördertechnik der Vorzone ein Subsystem des Transportnetzwerks 14 mit den dazugehörigen Transporteinrichtungen 15 dar. Wenn es unter diesen Transporteinrichtungen 15 wiederum solche geben sollte, deren Betriebsparameter 36 nicht veränderlich sind, so werden nur jene optimiert, deren Parameter 36 veränderlich sind. Dennoch ist auch in diesem Fall der eingangs beschriebene, verbesserte Materialfluss erzielbar.

### Bezugszeichenliste

- 10: Intralogistiksystem
- 12: Lager- und Kommissioniersystem
- 14: (Transport-)Netzwerk
- 15: Transporteinrichtung
- 16: Stetigförderer
- 18: Unstetigförderer
- 20: fahrerloses Transportfahrzeug (FTF)
- 22: Transportauftrag
- 24: Transportweg
- 26: Steuerung
- 28: Sensoren
- 30: Materialflussrechner (MFR)
- 32: Digitaler Zwilling des Materialflusses (DZ-MF)
- 34: (Betriebs-)Zustände
- 36: (Betriebs-)Parameter
- 38: (Simulations-)Modell für MF-Teilnehmer
- 38-1: Stetigförderer-Modell
- 38-2: Unstetigförderer-Modell
- 40: MF-(Simulations-)Modell
- 42: Parameteroptimierungseinrichtung
- 44: Analyseeinrichtung
- 46: Digitaler Zwilling einer Transporteinrichtung 15

## Patentansprüche

1. Intralogistiksystem (10), das aufweist:
ein Transportnetzwerk (14), das eine Vielzahl von Transporteinrichtungen (15; 16, 18) aufweist und das eingerichtet ist, einen durch Transportaufträge (22) hervorgerufenen Materialfluss innerhalb des Intralogistiksystems (10) zu implementieren, wobei jede der Transporteinrichtungen (15) mit mindestens einem vorab eingestellten, veränderlichen Betriebsparameter (36), betrieben wird;
eine Vielzahl von Sensoren (28), die aktuelle Betriebszustände (34) zyklisch erfassen; und
eine Steuerung (26), die einen Materialflussrechner (30) umfasst, der die Transportaufträge (22) initial plant und erzeugt, und die eine Umsetzung der Transportaufträge (22) basierend auf den aktuellen Betriebszuständen (34) zyklisch koordiniert;
wobei die Steuerung (26) ferner einen digitalen Materialfluss-Zwilling (32) umfasst, der ein Materialfluss-Simulationsmodell (40), eine Betriebsparameter-Optimierungseinrichtung (42) und eine Analyseeinrichtung (44) umfasst und der eingerichtet ist:
zyklisch den Materialfluss basierend auf den jeweiligen aktuellen Betriebszustände (34) mit und ohne variierenden Betriebsparametern (36) der Transporteinrichtungen (15) zu simulieren, wobei die Simulation des Materialflusses bis zu einem Zeitpunkt reicht, zu dem alle der initial erzeugten Transportaufträge erledigt sind,
die simulierten Materialflüsse in Bezug auf eine Durchsatzverbesserung zu analysieren,
und für den Fall, dass eine Durchsatzverbesserung analysiert wird, die entsprechend variierten Betriebsparameter (36) an die entsprechenden Transporteinrichtungen (15) zu übertragen, die danach basierend auf den variierten Betriebsparametern (36) betrieben werden.

2. Intralogistiksystem nach Anspruch 1, wobei der Materialflussrechner (30) eingerichtet ist:
initial die Transportaufträge (22) basierend auf Kommissionieraufträgen, Transportanforderungen und/oder Umlagerungsaufträgen zu planen, zu erzeugen und an die entsprechenden Transporteinrichtungen (15) zu übertragen;
den Materialfluss kontinuierlich basierend auf den aktuellen Betriebszuständen (34) zu koordinieren, indem im Falle eines Materialflussproblems eine Problemlösung basierend auf fest vorab definierten Lösungsregeln implementiert wird; und
die Betriebszustände (34) von den Sensoren (34) zu empfangen.

3. Intralogistiksystem nach Anspruch 1 oder 2, wobei
das Transportnetzwerk (14) eine Vielzahl von Transport-Quellen und eine Vielzahl von Transport-Zielen umfasst, die über eine Vielzahl von Transportwegen (24) miteinander verbunden sind, und
jeder der Transportaufträge (22) einen Handhabungseinheiten-spezifischen Transportweg (24) von einer der Quellen zu einem der Ziele definiert.

4. Intralogistiksystem nach einem der Ansprüche 1 bis 3, wobei die Durchsatzverbesserung in einer höheren Anzahl von erledigten Transportaufträgen (22) pro Zeiteinheit im Vergleich zum Materialfluss resultiert, der basierend auf den jeweiligen aktuellen Betriebszustände (34) ohne variierende Betriebsparameter (36) simuliert wird.

5. Intralogistiksystem nach einem der Ansprüche 1 bis 4, wobei die entsprechend variierten Betriebsparameter, die an die entsprechenden Transporteinrichtungen zu übertragen sind, die Transportaufträge unverändert lassen.

6. Intralogistiksystem nach einem der Ansprüche 1 bis 5, wobei zumindest einige, vorzugsweise alle, der Transporteinrichtungen (15) jeweils mindestens einen der Sensoren (28) umfassen.

7. Intralogistiksystem nach einem der Ansprüche 1 bis 6, wobei die Transporteinheiten (15) umfassen:
Unstetigförderer (18), insbesondere fahrerlose Transportfahrzeuge (20),
und/oder
Stetigförderer (16), insbesondere Rollenförderer, Bandförderer, Kettenförderer, und/oder Hängeförderer.

8. Intralogistiksystem nach einem der Ansprüche 1 bis 7, wobei das Intralogistiksystem (10) ein Lager- und Kommissioniersystem (12) ist, das ferner mindestens einen der nachfolgenden Funktionsbereiche aufweist:
ein Lager;
einen Wareneingang;
einen Warenausgang;
eine Arbeitsstation; und/oder
eine Produktion.

9. Verfahren zum verbesserten Implementieren eines initial geplanten Materialflusses in einem Intralogistiksystem (10), das aufweist: ein Transportnetzwerk (14), das eine Vielzahl von Transporteinrichtungen (15; 16, 18) aufweist und das eingerichtet ist, einen durch Transportaufträge (22) hervorgerufenen Materialfluss innerhalb des Intralogistiksystems (10) zu implementieren, wobei jede der Transporteinrichtungen (15) mit mindestens einem vorab eingestellten, veränderlichen Betriebsparameter (36), betrieben wird; eine Vielzahl von Sensoren (28); und eine Steuerung (26), die einen Materialflussrechner (30) umfasst; wobei das Verfahren die Schritte aufweist:
zyklisches Erfassen, durch die Sensoren (28), von aktuellen Betriebszuständen (34); und
initiales Planen und Erzeugen der Transportaufträge (22) sowie zyklisches Koordinieren der erzeugten Transportaufträge durch die Steuerung (30);
wobei die Steuerung (26) ferner einen digitalen Materialfluss-Zwilling (32) umfasst, der ein Materialfluss-Simulationsmodell (40), eine Betriebsparameter-Optimierungseinrichtung (42) und eine Analyseeinrichtung (44) umfasst und der folgenden zyklischen Schritte durchführt:
Simulieren des Materialflusses basierend auf den jeweiligen aktuellen Betriebszuständen (34) mit unveränderten Betriebsparametern (36) sowie mit einer Vielzahl veränderter Betriebsparameter (36) der Transporteinrichtungen (15),;
Analysieren der simulierten Materialflüsse in Bezug auf eine Durchsatzverbesserung;
für den Fall, dass eine Durchsatzverbesserung analysiert wird, Übertragen der entsprechend variierten Betriebsparameter (36) an die entsprechenden Transporteinrichtungen (15); und
Betreiben der entsprechenden Transporteinrichtungen (15) mit den variierten Betriebsparametern (36);
wobei die Simulation des Materialflusses bis zu einem Zeitpunkt reicht, zu dem alle der initial erzeugten Transportaufträge erledigt sind.

10. Verfahren nach Anspruch 9, wobei die Transporteinrichtungen (15) mit den variierten Betriebsparametern (36) betrieben werden, ohne die initial geplanten und erzeugten Fahraufträge (22) zu verändern.

## Claims

1. An intralogistics system (10) comprising:
a transport network (14) comprising a plurality of transport devices (15; 16, 18) and being configured to implement a material flow, caused by transport orders (22), within the intralogistics system (10), wherein each of the transport devices (15) is operated with at least one preset variable operating parameter (36);
a plurality of sensors (28) cyclically detecting current operating states (34); and
a controller (26) including a material-flow computer (30), which initially plans and generates the transport orders (22), and cyclically coordinating the implementation of the transport orders (22) based on the current operating states (34);
the controller (26) further including a digital material-flow twin (32), which includes a material-flow simulation model (40), an operating-parameter optimization device (42) and an analysis device (44) and is configured:
to cyclically simulate the material flow based on the respective current operating states (34) with and without varying operating parameters (36) of the transport devices (15), wherein the simulation of the material flow reaches up to a point in time at which all of the initially generated transport orders (22) have been completed,
to analyze the simulated material flows with regard to throughput improvement,
and in case that throughput improvement is analyzed, to transmit the correspondingly varied operating parameter (36) to the corresponding transport devices (15), which subsequently are operated based on the varied operating parameters (36).

2. The intralogistics system of claim 1, wherein the material-flow computer (30) is configured to:
initially plan and generate the transport orders (22) based on picking orders, transport requirements, and/or stock-transfer orders, and transmit the same to the corresponding transport devices (15);
continuously coordinate the material flow based on the current operating states (34) by implementing, in case of a material-flow problem, a problem solution based on fixed pre-defined solution rules; and
receive the operating states (34) from the sensors (28).

3. The intralogistics system of claim 1 or 2, wherein
the transport network (14) includes a plurality of transport sources and a plurality of transport destinations connected to each other via a plurality of transport paths (24), and
each of the transport orders (22) defines a handling-unit-specific transport path (24) from one of the sources to one of the destinations.

4. The intralogistics system of any of claims 1 to 3, wherein the throughput improvement results in a higher number of completed transport orders (22) per unit of time in comparison to the material flow, which is simulated based on the respective current operating states (34) without varying operating parameters (36).

5. The intralogistics system of any of claims 1 to 4, wherein the correspondingly varied operating parameters, which are to be transmitted to the corresponding transport devices, leave the transport orders unchanged.

6. The intralogistics system of any of claims 1 to 5, wherein at least some, preferably each of, the transport devices (15) respectively include at least one of the sensors (28).

7. The intralogistics system of any of claims 1 to 6, wherein the transport units (15) include:
discontinuous conveyors (18), in particular driverless transport vehicles (20), and/or
continuous conveyors (16), in particular roller conveyors, belt conveyors, chain conveyors, and/or overhead conveyors.

8. The intralogistics system of any of claims 1 to 7, wherein the intralogistics system (10) is a storage and order-picking system (12) further comprising at least one of the following functional areas:
a warehouse;
a goods receipt;
a goods issue;
a work station; and/or
a production.

9. A method for improved implemention an initially planned material flow in an intralogistics system (10), which comprises: a transport network (14) comprising a plurality of transport devices (15; 16, 18) and being configured to implement a material flow, caused by transport orders (22), within the intralogistics system (10), wherein each of the transport devices (15) is operated with at least one preset variable operating parameter (36); a plurality of sensors (28); and a controller (26) including a material-flow computer (30); wherein the method comprises the steps of:
cyclically detecting, by the sensors (28), current operating states (34); and
initially planning and generating the transport orders (22), as well as cyclically coordinating the generated transport orders by the controller (30);
wherein the controller (26) further includes a digital material-flow twin (32), which includes a material-flow simulation model (40), an operating-parameter optimization device (42) and an analysis device (44), and conducts the following cyclical steps:
simulating the material flow based on the respective current operating states (34) with non-varied operating parameters (36) as well as with a plurality of varied operating parameters (36) of the transport devices (15);
analyzing the simulated material flows with regard to throughput improvement;
in case that throughput improvement is analyzed, transmitting the correspondingly varied operating parameters (36) to the corresponding transport devices (15); and
operating the corresponding transport devices (15) with the varied operating parameters (36);
wherein the simulation of the material flow reaches up to a point in time at which all of the initially generated transport orders (22) have been completed.

10. The method of claim 9, wherein the transport devices (15) are operated with the varied operating parameters (36) without changing the initially planned and generated travelling orders (22).

## Revendications

1. Système intralogistique (10) présentant :
un réseau de transport (14) qui présente une pluralité de dispositifs de transport (15 ; 16, 18) et qui est configuré pour mettre en œuvre un flux de matériaux provoqué par des ordres de transport (22) à l'intérieur du système intralogistique (10), dans lequel chacun des dispositifs de transport (15) fonctionne avec au moins un paramètre de fonctionnement (36) réglé au préalable et pouvant être changé ;
une pluralité de capteurs (28) qui détectent de manière cyclique des états de fonctionnement (34) actuels ; et
un dispositif de commande (26) qui comprend un ordinateur de flux de matériaux (30) qui planifie initialement et génère les ordres de transport (22) et qui coordonne de manière cyclique une application des ordres de transport (22) sur la base des états de fonctionnement (34) actuels ;
dans lequel le dispositif de commande (26) comprend en outre un jumeau de flux de matériaux numérique (32) qui comprend un modèle de simulation de flux de matériaux (40), un dispositif d'optimisation de paramètres de fonctionnement (42) et un dispositif d'analyse (44) et qui est configuré pour :
simuler de manière cyclique le flux de matériaux sur la base des états de fonctionnement (34) actuels respectifs avec et sans paramètres de fonctionnement (36) variables des dispositifs de transport (15), dans lequel la simulation du flux de matériaux s'étend jusqu'à un moment où tous les ordres de transport initialement générés ont été accomplis,
analyser les flux de matériaux simulés en vue d'une amélioration de débit,
et, dans le cas où une amélioration de débit est analysée, transmettre les paramètres de fonctionnement (36) variés en conséquence aux dispositifs de transport (15) correspondants qui fonctionnent ensuite sur la base des paramètres de fonctionnement (36) variés.

2. Système intralogistique selon la revendication 1, dans lequel l'ordinateur de flux de matériaux (30) est configuré pour :
planifier initialement et générer les ordres de transport (22) sur la base d'ordres de préparation de commandes, de demandes de transport et/ou d'ordres de changement d'entrepôt et les transmettre aux dispositifs de transport (15) correspondants ;
coordonner en continu le flux de matériaux sur la base des états de fonctionnement (34) actuels en mettant en oeuvre, en cas de problème de flux de matériaux, une solution au problème sur la base de règles de solution définies au préalable de manière fixe ; et
recevoir les états de fonctionnement (34) en provenance des capteurs (34).

3. Système intralogistique selon la revendication 1 ou 2, dans lequel
le réseau de transport (14) comprend une pluralité de sources de transport et une pluralité de destinations de transport reliées entre elles par l'intermédiaire d'une pluralité de voies de transport (24), et
chacun des ordres de transport (22) définit une voie de transport (24) spécifique à l'unité de manipulation depuis l'une des sources jusqu'à l'une des destinations.

4. Système intralogistique selon l'une des revendications 1 à 3, dans lequel l'amélioration de débit résulte en un nombre plus élevé d'ordres de transport (22) accomplis par unité de temps par rapport au flux de matériaux qui est simulé sur la base des états de fonctionnement (34) actuels respectifs sans paramètres de fonctionnement (36) variables.

5. Système intralogistique selon l'une des revendications 1 à 4, dans lequel les paramètres de fonctionnement variés en conséquence à transmettre aux dispositifs de transport correspondants laissent les ordres de transport inchangés.

6. Système intralogistique selon l'une des revendications 1 à 5, dans lequel au moins certains des dispositifs de transport (15), de préférence tous, comprennent respectivement au moins l'un des capteurs (28).

7. Système intralogistique selon l'une des revendications 1 à 6, dans lequel les unités de transport (15) comprennent :
des transporteurs discontinus (18), en particulier des véhicules de transport sans conducteur (20),
et/ou
des transporteurs continus (16), en particulier des transporteurs à rouleaux, bandes transporteuses, transporteurs à chaîne, et/ou transporteurs suspendus.

8. Système intralogistique selon l'une des revendications 1 à 7, dans lequel le système intralogistique (10) est un système d'entreposage et de préparation de commandes (12) qui présente en outre au moins l'un des domaines fonctionnels suivants :
un entrepôt ;
une réception de marchandises ;
une sortie de marchandises ;
un poste de travail ; et/ou
un lieu de production.

9. Procédé pour la mise en œuvre améliorée d'un flux de matériaux planifié initialement dans un système intralogistique (10), présentant : un réseau de transport (14) qui présente une pluralité de dispositifs de transport (15 ; 16, 18) et qui est configuré pour mettre en œuvre un flux de matériaux provoqué par des ordres de transport (22) à l'intérieur du système intralogistique (10), dans lequel chacun des dispositifs de transport (15) fonctionne avec au moins un paramètre de fonctionnement (36) réglé au préalable et pouvant être changé ; une pluralité de capteurs (28) ; et un dispositif de commande (26) qui comprend un ordinateur de flux de matériaux (30) ; dans lequel le procédé présente les étapes consistant à :
détecter de manière cyclique, par les capteurs (28), des états de fonctionnement (34) actuels ; et
planifier initialement et générer les ordres de transport (22) ainsi que coordonner de manière cyclique les ordres de transport générés par le dispositif de commande (30) ;
dans lequel le dispositif de commande (26) comprend en outre un jumeau de flux de matériaux numérique (32) qui comprend un modèle de simulation de flux de matériaux (40), un dispositif d'optimisation de paramètres de fonctionnement (42) et un dispositif d'analyse (44) et qui exécute de manière cyclique les étapes suivantes :
simuler le flux de matériaux sur la base des états de fonctionnement (34) actuels respectifs avec des paramètres de fonctionnement (36) inchangés ainsi qu'avec une pluralité de paramètres de fonctionnement (36) changés des dispositifs de transport (15) ;
analyser les flux de matériaux simulés en vue d'une amélioration de débit ;
dans le cas où une amélioration de débit est analysée, transmettre les paramètres de fonctionnement (36) variés en conséquence aux dispositifs de transport (15) correspondants ; et
faire fonctionner les dispositifs de transport (15) correspondants avec les paramètres de fonctionnement (36) variés ;
dans lequel la simulation du flux de matériaux s'étend jusqu'à un moment où tous les ordres de transport initialement générés ont été accomplis.

10. Procédé selon la revendication 9, dans lequel les dispositifs de transport (15) fonctionnent avec les paramètres de fonctionnement (36) variés, sans changer les ordres de circulation (22) initialement planifiés et générés.
